# EUROPÄISCHE PATENTANMELDUNG

(11) **EP 3 255 918 A1**
(43) Veröffentlichungstag der Anmeldung: **13.12.2017**
(21) Anmeldenummer: 16173110.4
(22) Anmeldetag: 06.06.2016
(51) Int. Cl.: H04W 24/10, G06F 9/50, H04W 28/16

(54) **KOMMUNIKATIONSNETZWERK MIT SUBNETZWERKMANAGER ZUR ÜBERWACHUNG VON RESSOURCEN EINER MEHRZAHL VON SUBNETZWERKEN**

(71) Anmelder: Deutsche Telekom AG, 53113 Bonn (DE)
(72) Erfinder: PAUL, Manuel, 12683 Berlin (DE)
(74) Vertreter: Patentship Patentanwaltsgesellschaft mbH

(57) **Zusammenfassung**

Die Erfindung betrifft ein Kommunikationsnetzwerk (300, 400) mit einer Mehrzahl von Subnetzwerken (310, 320) mit einem ersten Subnetzwerk (Slice 1, 310) und einem zweiten Subnetzwerk (Slice II, 320), wobei dem ersten Subnetzwerk (310) eine erste Kommunikationsentität mit einer ersten Netzwerkfunktion (311) zugeordnet ist, wobei dem zweiten Subnetzwerk (320) eine zweite Kommunikationsentität mit einer zweiten Netzwerkfunktion (321) zugeordnet ist, mit: einem Subnetzwerkrnanager (330) zur Überwachung von Kommunikationsressourcen des ersten Subnetzwerks (310) und des zweiten Subnetzwerks (320); einem ersten Monitor (312), welcher ausgebildet ist, einen Kommunikationsstatus der ersten Netzwerkfunktion (311) der ersten Netzwerkentität des ersten Subnetzwerks (310) zu überwachen und ein erstes Statussignal (316) an den Subnetzwerkmanager (330) auszusenden, wobei das erste Statussignal (316) den Kommunikationsstatus der ersten Netzwerkfunktion (311) aufweist; einem zweiten Monitor (322), welcher ausgebildet ist, einen Kommunikationsstatus der zweiten Netzwerkfunktion (321) der zweiten Netzwerkentität des zweiten Subnetzwerks (320) zu überwachen und ein zweites Statussignal (326) an den Subnetzwerkmanager (330) auszusenden, wobei das zweite Statussignal (326) den Kommunikationsstatus der zweiten Netzwerkfunktion (321) aufweist; wobei der Subnetzwerkmanager (330) ausgebildet ist, die Kommunikationsressourcen des ersten Subnetzwerks (310) und des zweiten Subnetzwerks (320) auf der Basis des ersten Statussignals (316) und des zweiten Statussignals (326) zu überwachen.

## Beschreibung

Die vorliegende Erfindung betrifft ein Kommunikationsnetzwerk mit einer Mehrzahl von Subnetzwerken, insbesondere ein 5G-Kommunikationsnetzwerk mit mehreren Slices, deren Kommunikationsstatus von Monitoren überwacht wird, und einem Subnetzwerkmanager zur Überwachung der Kommunikationsressourcen der Subnetzwerke basierend auf Statussignalen der Monitore.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (IoT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Raumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Es ist die Aufgabe der vorliegenden Erfindung, ein Konzept zu schaffen, um die Flexibilität und Zuverlässigkeit der Kommunikation zu steigern, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

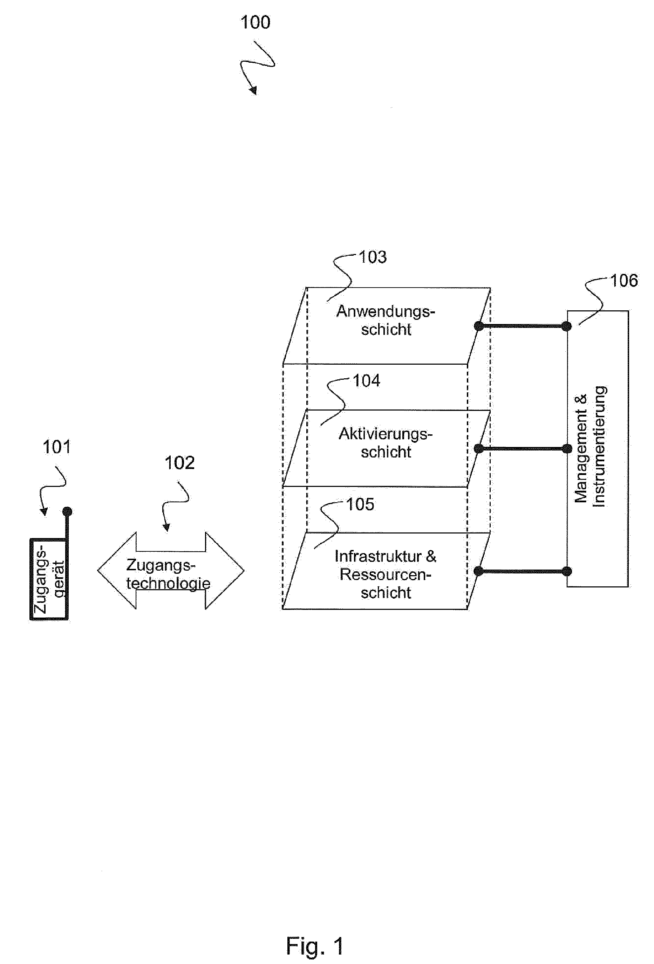

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management-& Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs-und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametem für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

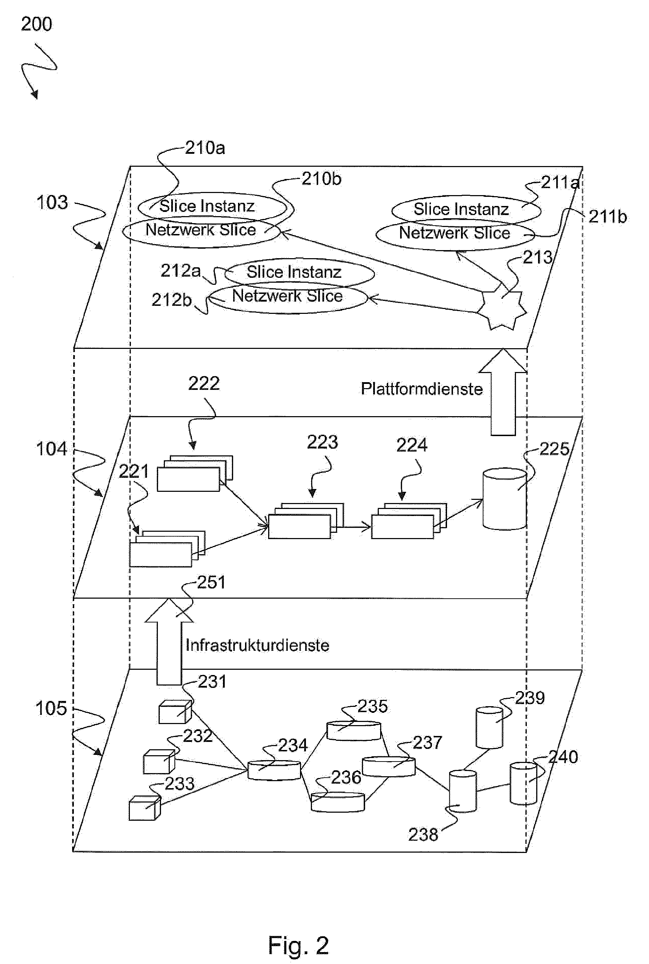

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfassen kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet, unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b 211 b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211 b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Kommunikationsnetzwerk mit einer Mehrzahl von Subnetzwerken mit einem ersten Subnetzwerk und einem zweiten Subnetzwerk, wobei dem ersten Subnetzwerk eine erste Kommunikationsentität mit einer ersten Netzwerkfunktion zugeordnet ist, wobei dem zweiten Subnetzwerk eine zweite Kommunikationsentität mit einer zweiten Netzwerkfunktion zugeordnet ist, mit: einem Subnetzwerkmanager zur Überwachung von Kommunikationsressourcen des ersten Subnetzwerks und des zweiten Subnetzwerks; einen ersten Monitor, welcher ausgebildet ist, einen Kommunikationsstatus der ersten Netzwerkfunktion der ersten Netzwerkentität des ersten Subnetzwerks zu überwachen und ein erstes Statussignal an den Subnetzwerkmanager auszusenden, wobei das erste Statussignal den Kommunikationsstatus der ersten Netzwerkfunktion aufweist; einem zweiten Monitor, welcher ausgebildet ist, einen Kommunikationsstatus der zweiten Netzwerkfunktion der zweiten Netzwerkentität des zweiten Subnetzwerks zu überwachen und ein zweites Statussignal an den Subnetzwerkmanager auszusenden, wobei das zweite Statussignal den Kommunikationsstatus der zweiten Netzwerkfunktion aufweist; wobei der Subnetzwerkmanager ausgebildet ist, die Kommunikationsressourcen des ersten Subnetzwerks und des zweiten Subnetzwerks auf der Basis des ersten Statussignals und des zweiten Statussignals zu überwachen.

Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden. Die Zuverlässigkeit der Kommunikation wird durch das Überwachen der jeweiligen Kommunikationsstatusmeldungen durch die Monitore und das Überwachen der Kommunikationsressourcen durch den Subnetzwerkmanager sichergestellt. Damit können stark heterogene Umgebungen gesteuert und überwacht werden, um so das Vertrauen der Netzwerknutzer sicherzustellen.

Gemäß einer Ausführungsform des Kommunikationsnetzwerks legt die erste Netzwerkfunktion eine Zuordnung von Kommunikationsressourcen des ersten Subnetzwerks zu der ersten Kommunikationsentität fest, und die zweite Netzwerkfunktion legt eine Zuordnung von Kommunikationsressourcen des zweiten Subnetzwerks zu der zweiten Kommunikationsentität fest.

Dies bringt den Vorteil, dass die erste Kommunikationsentität im ersten Subnetzwerk unabhängig von der zweiten Kommunikationsentität im zweiten Subnetzwerk betrieben und überwacht werden kann. Stellt der Subnetzwerkmanager einen Fehler in der ersten Netzwerkfunktion fest, so wirkt dieser sich nur auf das erste Subnetzwerk aus, nicht jedoch auch auf das zweite Subnetzwerk.

Gemäß einer Ausführungsform des Kommunikationsnetzwerks zeigt das erste Statussignal eine Auslastung der Kommunikationsressourcen des ersten Subnetzwerks an; und das zweite Statussignal zeigt eine Auslastung der Kommunikationsressourcen des zweiten Subnetzwerks zeigt.

Dies bringt den Vorteil, dass das erste Subnetzwerk und das zweite Subnetzwerk unabhängig voneinander mit verschiedenen Auslastungen betrieben werden können. Damit können die Subnetzwerke verschiedenen Kommunikationsumgebungen zugeordnet werden, die beispielsweise unterschiedliche Ressourcen benötigen.

Gemäß einer Ausführungsform des Kommunikationsnetzwerks ist das Kommunikationsnetzwerk ein Kommunikationssystem einer fünften Generation (5G) oder einer weiteren Generation, und die Subnetzwerke sind Slices des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einer Ausführungsform des Kommunikationsnetzwerks ist der Subnetzwerkmanager ausgebildet, die Kommunikationsressourcen des ersten Subnetzwerks und des zweiten Subnetzwerks auf der Basis des ersten Statussignals und des zweiten Statussignals zu steuern.

Dies bringt den Vorteil, dass beide Subnetzwerke unabhängig voneinander gesteuert werden können, jeweils abhängig von den Informationen, welche die den Subnetzwerken zugeordneten Monitore zur Verfügung stellen.

Gemäß einer Ausführungsform des Kommunikationsnetzwerks ist der Subnetzwerkmanager ausgebildet, die erste Netzwerkfunktion und/oder die zweite Netzwerkfunktion auf der Basis einer Identifikation eines Kommunikationsendgeräts zum Aufbau einer Kommunikationsverbindung zu dem Kommunikationsendgerät festzulegen.

Dies bietet den Vorteil, dass das Kommunikationsendgerät anhand seiner Identifikation bzw. Kennung, wie beispielsweise IMSI, IMEI, eID, einem Subnetz zugeordnet werden kann. Subnetzwerke können unterschiedlichen Anwendungen oder Diensten zugeordnet sein, sodass das Kommunikationsendgerät basierend auf seiner Identifikation dem jeweils entsprechenden Subnetzwerk oder auch mehreren Subnetzwerken zugeordnet werden kann. Die Subnetzwerke unterscheiden sich beispielsweise voneinander durch unterschiedliche Funktionen, Dienste oder Anwendungen. Die Zuordnung von Kommunikationsendgerät zu Subnetzwerk kann vorteilhafterweise schnell aufgefunden werden, da der Subnetzwerkmanager auf der gleichen Kommunikationsebene wie die Subnetze angeordnet sein kann, z.B. auf der Anwendungsschicht gemäß dem 5G Schichtenmodell. Ferner bietet dies den Vorteil, dass dem jeweiligen Subnetzwerk damit die Identifikation des Kommunikationsendgerätes vorliegt und es damit das Kommunikationsendgerät identifizieren und authentifizieren kann.

Gemäß einer Ausführungsform des Kommunikationsnetzwerks ist der Subnetzwerkmanager ausgebildet, die Kommunikationsverbindung zu dem Kommunikationsendgerät entsprechend der ersten Netzwerkfunktion und/oder der zweiten Netzwerkfunktion aufzubauen.

Dies bringt den Vorteil, dass die Steuerung der Netzwerkressourcen der jeweiligen Subnetzwerke durch die entsprechenden Netzwerkfunktionen vorgegeben ist, so dass eine schnelle Bereitstellung von Netzwerkressourcen zu den Subnetzwerken anhand der jeweiligen Netzwerkfunktion erfolgen kann. Damit ist das Kommunikationsnetzwerk in der Lage, eine Kommunikationsanfrage eines Kommunikationsendgeräts nach einer Kommunikationsverbindung schnell zu beantworten, die Kommunikationsressourcen der entsprechenden Subnetzwerke schnell bereitzustellen und damit einen schnellen und flexiblen Kommunikationsaufbau zu bewirken. Neben dem schnellen Aufbau der Kommunikationsverbindung können die jeweiligen Monitore auch schnell Fehler in den Kommunikationsressourcen erkennen und damit eine schnelle und effiziente Umschaltung des Kommunikationspfades realisieren.

Gemäß einer Ausführungsform des Kommunikationsnetzwerks ist der Subnetzwerkmanager ausgebildet, Zugangseinrichtungen, Netzwerkeinrichtungen, Prozessoreinrichtungen und/oder Speichereinrichtungen des ersten Subnetzwerks entsprechend der ersten Netzwerkfunktion zum Aufbau der Kommunikationsverbindung zu dem Kommunikationsendgerät zusammenzustellen und zu konfigurieren.

Dies bringt den Vorteil, dass der Subnetzwerkmanager die für den Aufbau der Kommunikationsverbindung mit dem Kommunikationsendgerät erforderlichen Ressourcen des Subnetzwerks aus einer Mehrzahl von vorhandenen Ressourcen des Subnetzwerks, wie z.B. Zugangseinrichtungen, Netzwerkeinrichtungen, Prozessoreinrichtungen und/oder Speichereinrichtungen basierend auf der Netzwerkfunktion auswählen und zusammenstellen kann. Damit lässt sich eine flexible Ressourcenplanung ermöglichen, bei der die Kommunikationsressourcen erst zum Zeitpunkt des Aufbaus der Kommunikationsverbindung, d.h. zu dem am spätesten möglichen Zeitpunkt allokiert werden. Die Monitore können in vorteilhafter Weise die für den Kommunikationsaufbau verwendeten Ressourcen überwachen und dem Subnetzwerkmanager mitteilen, welche Ressourcen des Subnetzwerks bereits belegt sind bzw. welche noch zur Verfügung stehen. Damit lässt sich eine sehr effiziente Ressourcennutzung realisieren.

Gemäß einer Ausführungsform des Kommunikationsnetzwerks ist der Subnetzwerkmanager ausgebildet, Bandbreiten, Datenraten, Diensttypen und/oder Dienstqualität von Kommunikationsressourcen des ersten Subnetzwerks entsprechend der ersten Netzwerkfunktion zum Aufbau der Kommunikationsverbindung zu dem Kommunikationsendgerät zu konfigurieren.

Dies bringt den Vorteil, dass über die erste Netzwerkfunktion die entsprechenden physikalischen Parameter der Kommunikationsressourcen des ersten Subnetzwerkes, wie z.B. Bandbreiten, Datenraten, Diensttypen und/oder Dienstqualität eingestellt werden können. Die im ersten Subnetzwerk zur Verfügung stehenden Ressourcen können daher zielgerichtet allokiert und zur Kommunikationsverbindung genutzt werden.

Gemäß einer Ausführungsform des Kommunikationsnetzwerks ist der Subnetzwerkmanager ausgebildet, basierend auf dem ersten Statussignal einen Fehler in den Kommunikationsressourcen des ersten Subnetzwerks zu erkennen.

Dies bringt den Vorteil, dass der Subnetzwerkmanager stets über den Zustand der Kommunikationsressourcen der jeweiligen Subnetzwerke informiert ist und so einen flexiblen Kommunikationsaufbau mit fehlerfreien Kommunikationsressourcen ermöglichen kann. Damit erhöht sich die Zuverlässigkeit des gesamten Kommunikationsnetzwerks.

Gemäß einer Ausführungsform des Kommunikationsnetzwerks ist der Subnetzwerkmanager ausgebildet, bei Erkennung eines Fehlers in den Kommunikationsressourcen des ersten Subnetzwerks die erste Netzwerkfunktion so abzuändern, dass sie eine Zuordnung von fehlerfreien Kommunikationsressourcen des ersten Subnetzwerks zu der ersten Kommunikationsentität festlegt.

Dies bringt den Vorteil, dass bei Erkennung eines Fehlers über eine einfache Änderung der ersten Netzwerkfunktion die fehlerbehafteten Ressourcen aus dem Kommunikationspfad genommen werden können und durch fehlerfreie Komponenten ausgetauscht werden können. Die Kommunikationsverbindung kann hierbei nach wie vor über das gleiche Subnetzwerk weiterlaufen, so dass der Aufwand des Umbaus der Kommunikation sehr gering ist.

Gemäß einer Ausführungsform des Kommunikationsnetzwerks ist der Subnetzwerkmanager ausgebildet, bei Erkennung eines Fehlers in den Kommunikationsressourcen des ersten Subnetzwerks die Kommunikationsverbindung zu dem Kommunikationsendgerät entsprechend der abgeänderten ersten Netzwerkfunktion und/oder der zweiten Netzwerkfunktion umzukonfigurieren.

Dies bringt den Vorteil, dass bei Erkennung eines Fehlers über eine Änderung der ersten Netzwerkfunktion und/oder der zweiten Netzwerkfunktion die fehlerbehafteten Ressourcen aus dem Kommunikationspfad genommen werden können und durch fehlerfreie Komponenten ausgetauscht werden können. Die Kommunikationsverbindung kann hierbei entweder über das gleiche Subnetzwerk weiterlaufen oder über ein zweites Subnetzwerk umarrangiert werden, je nach Vorgabe durch die jeweilige Netzwerkfunktion. Damit sind flexible Kommunikationspfade realisierbar, die sich im Fehlerfall sehr schnell umbauen lassen.

Gemäß einer Ausführungsform des Kommunikationsnetzwerks ist dem ersten Subnetzwerk eine dritte Kommunikationsentität mit einer dritten Netzwerkfunktion zugeordnet; und der Subnetzwerkmanager ist ausgebildet, die Kommunikationsverbindung zu dem Kommunikationsendgerät unter Verwendung der ersten Kommunikationsentität gemäß der ersten Netzwerkfunktion und der dritten Kommunikationsentität gemäß der dritten Netzwerkfunktion aufzubauen.

Dies bringt den Vorteil, dass die Kommunikationsverbindung im ersten Subnetzwerk über verschiedene Kommunikationsentitäten geführt werden kann, die sich jeweils über entsprechende Netzwerkfunktionen konfigurieren bzw. ansteuern lassen. Damit kann beispielsweise die erste Netzwerkfunktion der ersten Kommunikationsentität für eine Vielzahl von Kommunikationsverbindungen über das erste Subnetzwerk genutzt werden, während die dritte Netzwerkfunktion der dritten Kommunikationsentität eine spezielle Konfiguration zusätzlicher Ressourcen für bestimmte Kommunikationsverbindungen bereitstellt. Dies bietet den Vorteil, dass eine große Zahl von Kommunikationsverbindungen sich effizient, schnell und zuverlässig konfigurieren und überwachen lässt.

Gemäß einer Ausführungsform des Kommunikationsnetzwerks ist das zweite Subnetzwerk ein von dem ersten Subnetzwerk isoliertes Test-Subnetzwerk; und der zweite Monitor ist ausgebildet, den Kommunikationsstatus der zweiten Netzwerkfunktion der zweiten Netzwerkentität in Abhängigkeit verschiedener Testversionen der zweiten Netzwerkfunktion zu überwachen.

Dies bietet den Vorteil, dass sich das zweite Subnetzwerk unabhängig von dem ersten Subnetzwerk betreiben lässt, so dass sich auf dem zweiten Subnetzwerk geladener Testcode für Netzwerkfunktionen des zweiten Subnetzwerks nicht auf die Funktionsweise des ersten Subnetzwerks auswirkt. Damit lassen sich Teilsubnetzwerke des Kommunikationsnetzwerks in Echtzeit testen ohne den Betrieb der restlichen Subnetzwerke zu beeinträchtigen. Ferner kann Fremdcode eines fremden Netzwerkbetreibers auf dafür speziell zur Verfügung gestellten Subnetzwerken des Kommunikationsnetzwerks laufen ohne den Betrieb von Subnetzwerken des eigenen bzw. Heimat-Netzwerkbetreibers (negativ) zu beeinflussen.

Gemäß einem zweiten Aspekt betrifft die Erfindung ein Verfahren zum Überwachen eines Kommunikationsnetzwerks mit einer Mehrzahl von Subnetzwerken mit einem ersten Subnetzwerk und einem zweiten Subnetzwerk, wobei dem ersten Subnetzwerk eine erste Kommunikationsentität mit einer ersten Netzwerkfunktion zugeordnet ist, und wobei dem zweiten Subnetzwerk eine zweite Kommunikationsentität mit einer zweiten Netzwerkfunktion zugeordnet ist, wobei das Verfahren die folgenden Schritte aufweist: Überwachen eines Kommunikationsstatus der ersten Netzwerkfunktion der ersten Netzwerkentität des ersten Subnetzwerks durch einen ersten Monitor und Aussenden eines ersten Statussignals an einen Subnetzwerkmanager, wobei das erste Statussignal den Kommunikationsstatus der ersten Netzwerkfunktion anzeigt; Überwachen eines Kommunikationsstatus der zweiten Netzwerkfunktion der zweiten Netzwerkentität des zweiten Subnetzwerks durch einen zweiten Monitor und Aussenden eines zweiten Statussignals an den Subnetzwerkmanager, wobei das zweite Statussignal den Kommunikationsstatus der zweiten Netzwerkfunktion anzeigt; und Überwachen von Kommunikationsressourcen des ersten Subnetzwerks und des zweiten Subnetzwerks durch den Subnetzwerkmanager auf der Basis des ersten Statussignals und des zweiten Statussignals.

Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden. Die Zuverlässigkeit der Kommunikation wird durch das Überwachen der jeweiligen Kommunikationsstatusmeldungen durch die Monitore und das Überwachen der Kommunikationsressourcen durch den Subnetzwerkmanager sichergestellt. Damit können stark heterogene Umgebungen gesteuert und überwacht werden, um so das Vertrauen der Netzwerknutzer sicherzustellen.

Gemäß einer Ausführungsform des Verfahrens ist das Kommunikationsnetzwerk ein Kommunikationssystem einer fünften Generation (5G) oder einer weiteren Generation, und die Subnetzwerke sind Slices des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationsnetzwerkes 300 mit mehreren Subnetzwerken 310, 320, den Subnetzwerken zugeordneten Monitoren 312, 322 und einem Subnetzwerkmanager 330 gemäß einer beispielhaften Ausführungsform;
Fig. 4 eine schematische Darstellung eines Kommunikationsnetzwerkes 400 mit mehreren Monitoren zum Überwachen der Subnetzwerken 310, 320 und einem Subnetzwerkmanager 330 zum Überwachen und Steuern der Subnetzwerke gemäß einer beispielhaften Ausführungsform; und
Fig. 5 eine schematische Darstellung eines Verfahrens 500 zum Überwachen eines Kommunikationsnetzwerkes mit einer Mehrzahl an Subnetzwerken gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

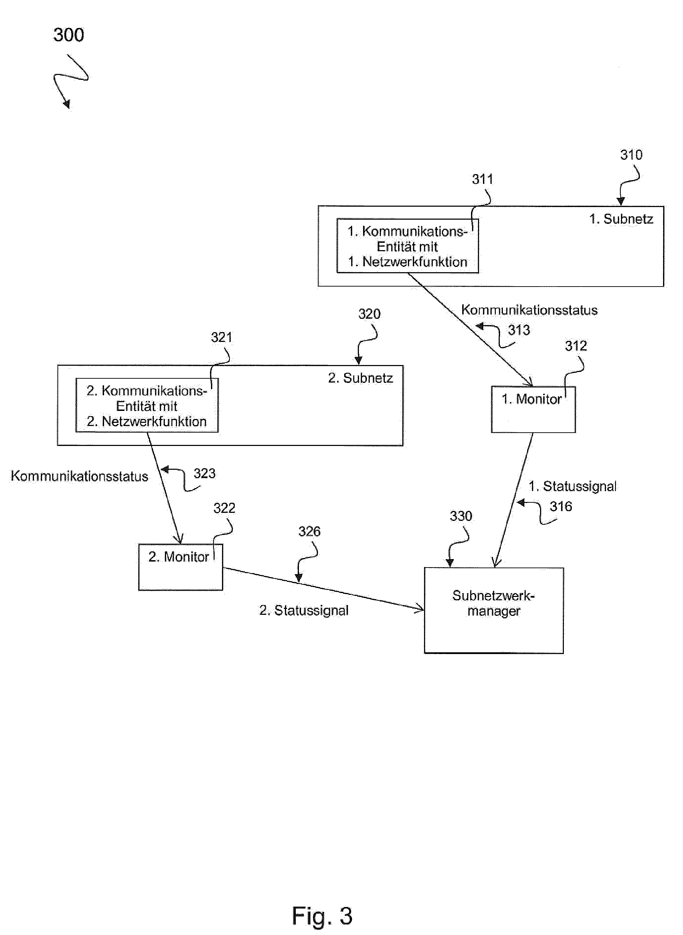

Fig. 3 zeigt eine schematische Darstellung eines Kommunikationsnetzwerkes 300 mit mehreren Subnetzwerken 310, 320, den Subnetzwerken zugeordneten Monitoren 312, 322 und einem Subnetzwerkmanager 330 gemäß einer beispielhaften Ausführungsform.

Die Mehrzahl von Subnetzwerken 310, 320 umfassen beispielsweise ein erstes Subnetzwerk (Slice I) 310 und ein zweites Subnetzwerk (Slice II) 320, wie in Figur 3 dargestellt. Natürlich kann das Kommunikationsnetzwerk 300 noch weitere, aus Gründen der Übersichtlichkeit nicht in Fig. 3 dargestellte Subnetzwerke umfassen. Dem ersten Subnetzwerk 310 ist eine erste Kommunikationsentität mit einer ersten Netzwerkfunktion 311 zugeordnet. Dem zweiten Subnetzwerk 320 ist eine zweite Kommunikationsentität mit einer zweiten Netzwerkfunktion 321 zugeordnet. Das Kommunikationsnetzwerk 300 umfasst einen Subnetzwerkmanager 330 zur Überwachung von Kommunikationsressourcen des ersten Subnetzwerks 310 und des zweiten Subnetzwerks 320. Das Kommunikationsnetzwerk 300 umfasst einen ersten Monitor 312 und einen zweiten Monitor 322.

Der erste Monitor 312 dient dazu, einen Kommunikationsstatus der ersten Netzwerkfunktion 311 der ersten Netzwerkentität des ersten Subnetzwerks 310 zu überwachen und ein erstes Statussignal 316 an den Subnetzwerkmanager 330 auszusenden. Das erste Statussignal 316 umfasst bzw. zeigt den Kommunikationsstatus der ersten Netzwerkfunktion 311 an.

Der zweite Monitor 322 dient dazu, einen Kommunikationsstatus der zweiten Netzwerkfunktion 321 der zweiten Netzwerkentität des zweiten Subnetzwerks 320 zu überwachen und ein zweites Statussignal 326 an den Subnetzwerkmanager 330 auszusenden, Das zweite Statussignal 326 umfasst bzw. zeigt den Kommunikationsstatus der zweiten Netzwerkfunktion 321 an.

Der Subnetzwerkmanager 330 dient dazu, die Kommunikationsressourcen des ersten Subnetzwerks 310 und des zweiten Subnetzwerks 320 auf der Basis des ersten Statussignals 316 und des zweiten Statussignals 326 zu überwachen.

Die erste Netzwerkfunktion 311 kann eine Zuordnung von Kommunikationsressourcen des ersten Subnetzwerks 310 zu der ersten Kommunikationsentität festlegen. Die zweite Netzwerkfunktion 321 kann eine Zuordnung von Kommunikationsressourcen des zweiten Subnetzwerks 320 zu der zweiten Kommunikationsentität festlegen.

Das erste Statussignal 316 kann eine Auslastung der Kommunikationsressourcen des ersten Subnetzwerks 310 anzeigen. Das zweite Statussignal 326 kann eine Auslastung der Kommunikationsressourcen des zweiten Subnetzwerks 320 anzeigen. Eine Auslastung kann beispielsweise einen Prozentwert in Bezug auf eine Maximallast angeben. Die Auslastung kann in Prozent bezogen auf eine verfügbare Bandbreite der bereitstehenden Kommunikationsressourcen angegeben sein.

Das Kommunikationsnetzwerk 300 kann beispielsweise ein Kommunikationssystem einer fünften Generation (5G) oder einer weiteren Generation sein, und die Subnetzwerke 310, 320 können Slices des Kommunikationsnetzwerkes 300 sein, beispielsweise entsprechend der Darstellung und der Beschreibung zu den Figuren 1 und 2.

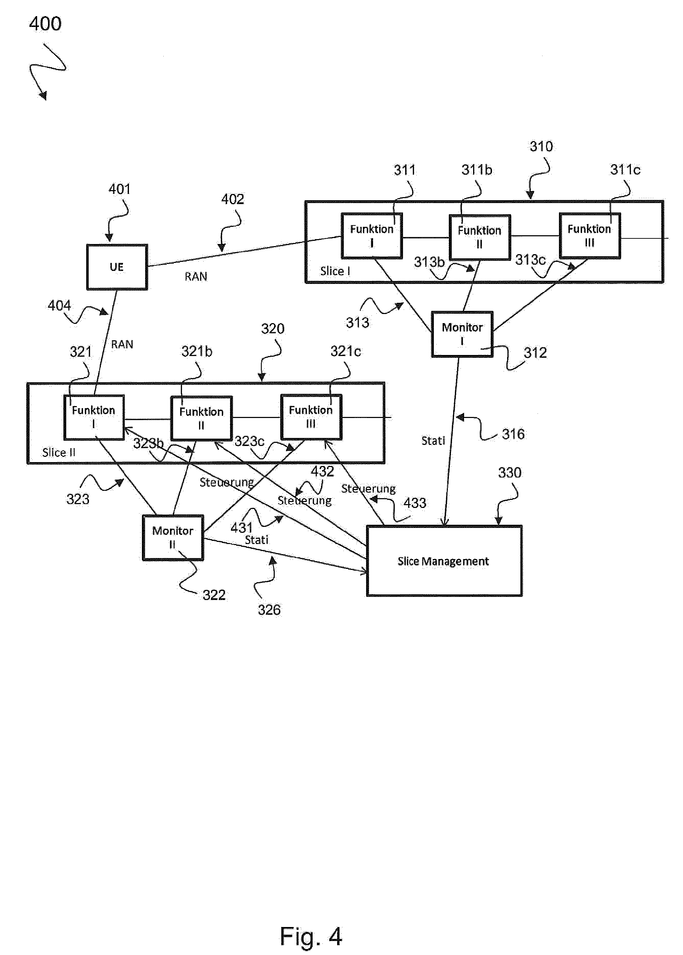

Der Subnetzwerkmanager 330 kann die Kommunikationsressourcen des ersten Subnetzwerks 310 und des zweiten Subnetzwerks 320 auf der Basis des ersten Statussignals 316 und des zweiten Statussignals 326 steuern, wie unten zu Figur 4 näher beschrieben.

Fig. 4 zeigt eine schematische Darstellung eines Kommunikationsnetzwerkes 400 mit mehreren Monitoren zum Überwachen der Subnetzwerken 310, 320 und einem Subnetzwerkmanager 330, hier auch als "Slice Management" bezeichnet, zum Überwachen und Steuern der Subnetzwerke, auch als "Slices" bezeichnet, gemäß einer beispielhaften Ausführungsform.

Die Grundidee des Kommunikationsnetzwerkes 400 ist hierbei, dass jedem Slice 310, 320 sein eigenen Monitor 312, 322 zugeordnet ist, welcher den Status der Slice-Funktionen überwacht. Dadurch sind u.a. eine Erkennung eines Fehlers, eine dynamische Ressourcensteuerung (auch für QoS), sowie ein Slice-Test, beispielsweise in einer gesicherten Umgebung, möglich.

Die ersten 312 und zweiten 322 Monitoren (Monitoren I und II) überwachen die Stati/Funktionalitäten der Funktionen der Slices und geben ihre Ergebnisse zum Subnetzwerkmanager 330, hier auch als "Slice Management" bezeichnet, weiter. Das Slice Management 330 (betreiberseitig) empfängt die Daten, validiert diese und bestimmt daraus eine QOS-Steuerung, Ressourcen-Steuerung, Load-Balancing, was in den Slices (intra-slice) und zwischen den Slices (inter-slice) geschehen kann.

Basierend auf dem grundlegenden Ressourcen-Anforderungsprofil können die Slices 310, 320 vorkonfiguriert, bzw. zur Laufzeit parametrisiert werden. Mittels des Ressourcen-Monitors 312, 322 und dem Abgleich mit dem bestehenden Applikations-Profil, z.B. einer geographischen Verteilung oder einem Mobilitätsprofil, kann das Laufzeitverhalten überprüft werden. Abweichungen, die nicht von einem Hinzufügen neuer UEs, Kundenendpunkten oder Service-Leistungen stammen, können über einen Abgleich mit dem Slice/Service-Manager 330 erkannt werden. Neben dem Slice-Manager 330 bzw. Subnetzwerkmanager 330, der die Kontrolle der versorgten Funktionsinstanzen und/oder der Service-Topologie innerhalb der Slices 310, 320 übernehmen kann, kann das Kommunikationsnetzwerk 400 zusätzlich einen Infrastruktur-Ressourcen-Manager (nicht in Fig. 4 dargestellt) aufweisen, der beispielsweise Infrastruktur-Ressourcen, Topologie und/oder geographische Verteilung überwachen kann.

Die Slices 310, 320 können reguläre Slices oder Test-Slices sein, der Slice Manager 330 kann eine Aktion auslösen, oder abwarten (Test-Slice), wie sich eine Störung auswirkt. Das Slice-Management 330 kann, im Kontext der NGMN-Architektur (siehe Figur 1), in der Ressourcensteuerung oberhalb des Infrastruktur-Layers 105, d.h. beispielsweise in der Schicht 104 der Figuren 1 und 2, verortet sein und kann die Slice- oder Ressourcensteuerung in Abhängigkeit von den durch den jeweiligen Monitor erfassten Stati übernehmen.

Status-Informationen 316, 326 können über eine Schnittstelle am Slice-Management 330 an den Kunden (Slice-User) weitergegeben werden. Das User Equipment (UE) kann über das Radio Access Network (RAN) gleichzeitig mit mehreren Slices 310, 320 verbunden sein.

Der Monitor 312, 322 ist beispielsweise verantwortlich für die Überwachung aller funktionalen Ressourcen innerhalb einer Slice 310, 320. Er steht mit dem Slice Management 330 in Verbindung, welches die funktionalen Ressourcen steuert. In Fig. 4 gibt es eine eigene Monitoring-Instanz je Slice 310, 320. Gemonitort werden können je nach Funktionstyp Prozessor- oder Netzressourcen-Auslastung. Der Monitor 312, 322 ermöglicht insbesondere: A) Service-specific Slicing; B) Test-Slices für Beta-Anwendungen; und C) Installation und Ausführung von Fremdcode in Slices.

Das Kommunikationsnetzwerk 400 entspricht dem oben zu Figur 3 beschriebenen Kommunikationsnetzwerk 300, wobei dem ersten Subnetzwerk 310 noch eine dritte Kommunikationsentität mit einer dritten Netzwerkfunktion 311 b und eine vierte Kommunikationsentität mit einer vierten Netzwerkfunktion 311 c zugeordnet ist und wobei dem zweiten Subnetzwerk 320 noch eine fünfte Kommunikationsentität mit einer fünften Netzwerkfunktion 321 b und eine sechste Kommunikationsentität mit einer sechsten Netzwerkfunktion 321c zugeordnet ist.

Ein Kommunikationsstatus der dritten Netzwerkfunktion 311 b wird zum ersten Monitor 312 übertragen und ein Kommunikationsstatus der vierten Netzwerkfunktion 311 c wird zum ersten Monitor 312 übertragen. Der erste Monitor 312 bestimmt aus den Kommunikationsstatus der einzelnen Netzwerkfunktionen 311, 311 b, 311 c das erste Statussignal 316, das er zum Subnetzwerkmanager 330 überträgt.

Ein Kommunikationsstatus der fünften Netzwerkfunktion 321 b wird zum zweiten Monitor 322 übertragen und ein Kommunikationsstatus der sechsten Netzwerkfunktion 321 c wird zum zweiten Monitor 322 übertragen. Der zweite Monitor 322 bestimmt aus den Kommunikationsstatus der einzelnen Netzwerkfunktionen 321, 321 b, 321 c das zweite Statussignal 326, das er zum Subnetzwerkmanager 330 überträgt.

Das Kommunikationsnetzwerk 400 kann weitere Subnetzwerke umfassen, die gleichartig aufgebaut sein können.

Der Subnetzwerkmanager 330 kann die einzelnen Netzwerkfunktionen 321, 321 b, 321 c basierend auf einer Auswertung des zweiten Statussignals 326 steuern. In gleicher Weise kann der Subnetzwerkmanager 330 die einzelnen Netzwerkfunktionen 311, 311 b, 311 c des ersten Subnetzwerks 310 basierend auf einer Auswertung des ersten Statussignals 316 steuern, was aus Gründen der Einfachheit nicht in Figur 4 dargestellt ist.

Das Kommunikationsnetzwerk kann ferner ein Kommunikationsendgerät 401, z.B. ein UE, umfassen, das eine Kommunikation zu dem Kommunikationsnetzwerk aufbauen kann, beispielsweise über das erste Subnetzwerk 310 oder über das zweite Subnetzwerk 320 oder über beide Subnetzwerke 310, 320, wie hier in Figur 4 dargestellt.

Der Subnetzwerkmanager 330 kann beispielsweise die erste Netzwerkfunktion 311 und/oder die zweite Netzwerkfunktion 321 auf der Basis einer Identifikation des Kommunikationsendgeräts 401 zum Aufbau einer Kommunikationsverbindung zu dem Kommunikationsendgerät 401 festlegen. So kann der Subnetzwerkmanager 330 beispielsweise die Kommunikationsverbindung zu dem Kommunikationsendgerät 401 entsprechend der ersten Netzwerkfunktion 311 und/oder der zweiten Netzwerkfunktion 321 aufbauen.

Der Subnetzwerkmanager 330 kann dazu beispielsweise Zugangseinrichtungen, Netzwerkeinrichtungen, Prozessoreinrichtungen und/oder Speichereinrichtungen des ersten Subnetzwerks 310 entsprechend der ersten Netzwerkfunktion 311 zum Aufbau der Kommunikationsverbindung zu dem Kommunikationsendgerät 401 zusammenstellen und konfigurieren. Zugangseinrichtungen können beispielsweise den Zugangsknoten 231, 232, 233 des 5G Kommunikationsnetzwerks 200 gemäß Figur 2 entsprechen. Prozessoreinrichtungen können beispielsweise den Computerknoten 238, 239, 240 des 5G Kommunikationsnetzwerks 200 entsprechen. Netzwerkeinrichtungen können beispielsweise den virtuellen Netzwerkknoten 234, 235, 236, 237 des 5G Kommunikationsnetzwerks 200 entsprechen.

Der Subnetzwerkmanager 330 kann Bandbreiten, Datenraten, Diensttypen und/oder Dienstqualität von Kommunikationsressourcen des ersten Subnetzwerks 310 entsprechend der ersten Netzwerkfunktion 311 zum Aufbau der Kommunikationsverbindung zu dem Kommunikationsendgerät 401 konfigurieren. In gleicher Weise kann er die Ressourcen der anderen Subnetzwerke konfigurieren.

Der Subnetzwerkmanager 330 kann basierend auf dem ersten Statussignal 316 einen Fehler in den Kommunikationsressourcen des ersten Subnetzwerks 310 erkennen. Beispielsweise kann der Subnetzwerkmanager 330 eine Überlast der Kommunikationsressourcen des ersten Subnetzwerks 310 erkennen, wenn das erste Statussignal 316 eine Auslastung der Kommunikationsressourcen oberhalb einer Schwelle anzeigt, beispielsweise bei einem Wert oberhalb von 90% oder 95%.

Der Subnetzwerkmanager 330 kann bei Erkennung eines Fehlers in den Kommunikationsressourcen des ersten Subnetzwerks 310 die erste Netzwerkfunktion 311 so abzuändern, dass sie eine Zuordnung von fehlerfreien Kommunikationsressourcen des ersten Subnetzwerks 310 zu der ersten Kommunikationsentität festlegt.

Der Subnetzwerkmanager 330 kann bei Erkennung eines Fehlers in den Kommunikationsressourcen des ersten Subnetzwerks 310 die Kommunikationsverbindung zu dem Kommunikationsendgerät 401 entsprechend der abgeänderten ersten Netzwerkfunktion (311) und/oder der zweiten Netzwerkfunktion 321 umkonfigurieren.

Der Subnetzwerkmanager 330 kann alternativ oder zusätzlich die Kommunikationsverbindung zu dem Kommunikationsendgerät 401 unter Verwendung der ersten Kommunikationsentität gemäß der ersten Netzwerkfunktion 311 und der dritten Kommunikationsentität gemäß der dritten Netzwerkfunktion 311b aufbauen, d.h. der Subnetzwerkmanager 330 kann eine oder mehrere Netzwerkfunktionen des ersten Subnetzwerks 310 nutzen, um die Kommunikationsverbindung aufzubauen. So können beispielsweise die erste Netzwerkfunktion 311 und die dritte Netzwerkfunktion 311b und optional zusätzlich die vierte Netzwerkfunktion 311c und weitere Netzwerkfunktionen des ersten Subnetzwerks 310 hintereinandergeschaltet werden, um die Kommunikationsverbindung aufzubauen oder umzubauen.

In einer speziellen Ausführungsform des Kommunikationsnetzwerks 400 kann das zweite Subnetzwerk 320 ein von dem ersten Subnetzwerk 310 isoliertes Test-Subnetzwerk sein. Hier kann der zweite Monitor 322 den Kommunikationsstatus der zweiten Netzwerkfunktion 321 der zweiten Netzwerkentität in Abhängigkeit verschiedener Testversionen der zweiten Netzwerkfunktion 321 überwachen, wie in den vier im Folgenden aufgezeigten Anwendungsfällen näher beschrieben.
Anwendungsfall 1: Slice-Monitor als Crash-Monitor für eine isolierte Testumgebung (Test-Slice). Bei neuen Funktionen oder experimentellen Diensten kann eine Validierung in einer von der Wirkumgebung isolierten Testumgebung (Test-Slice) durchgeführt werden. Ein Crash, d.h. abnormales Ressourcenverhalten einer oder mehrerer Funktionen in der Test-Slice, kann über den Abgleich von Standard-Ressourcenprofil und vom Monitor gemessenem Status zur Laufzeit durch den Slice-Manager ermittelt werden.
Anwendungsfall 2: Slice-Monitor zur Validierung des Dienst-/Anforderungsprofiles für Beta-Anwendungen. Bei Funktionen, für die seitens des Plattformbetreibers Unsicherheit mit dem Ressourcenbedarfsprofil besteht, z.B. wenn diese von Drittentwicklern bereitgestellt werden, kann eine Validierung des Ressourcenprofils in der Testumgebung (Test-Slice), durch Monitoring des Ressourcenverhaltens innerhalb der Slice über einen passenden Zeitraum, durchgeführt werden.
Anwendungsfall 3: Slice-Monitor zur Ermittlung und Festlegung eines Dienst-/Anforderungsprofiles für Beta-Anwendungen. Im Falle eines unbekannten, d.h. vom Funktionsentwickler nicht vorgegebenen Ressourcenprofils (neue Anwendung) kann dieses durch Monitoring des Ressourcenverhaltens in der Slice ermittelt werden. Das über einen passenden Zeitraum ermittelte Standard-Ressourcenanforderungsprofil kann anschließend als Planungsgrundlage (Policy-Defintion) für die Nutzung der Anwendung im Wirknetz (Wirknetz-Slice) genutzt werden. Diese Profilermittlung kann seitens des Betreibers auch als Service-Leistung angeboten werden.
Anwendungsfall 4: Fremdcode in speziell geschütztem Container innerhalb der Slice kann durch den Monitor überwacht werden. Damit ist es möglich, Fremdcode von anderen Netzwerkbetreibern auf dem Test-Subnetzwerk zu betreiben ohne die anderen Subnetzwerke negativ zu beeinflussen.

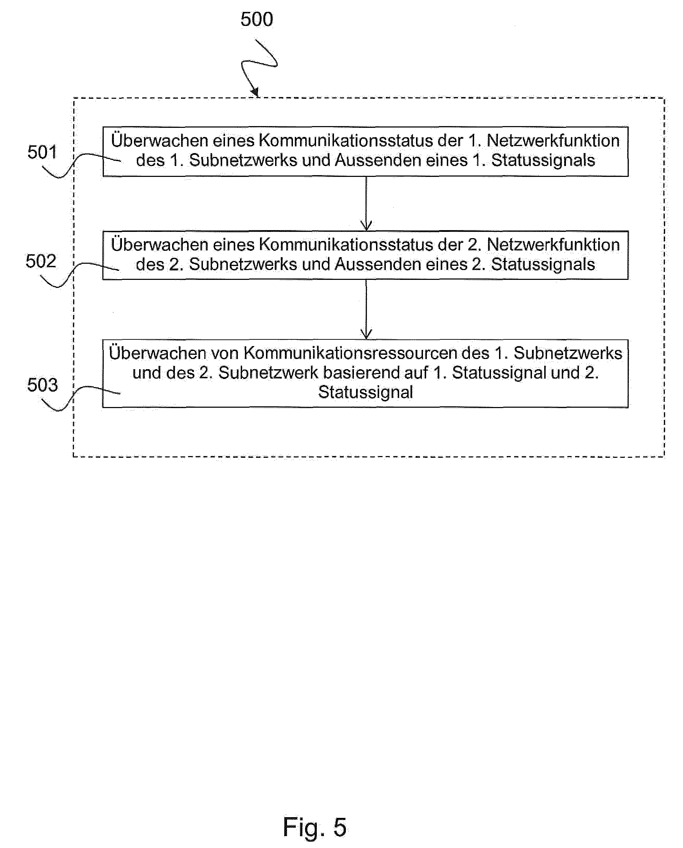

Fig. 5 zeigt eine schematische Darstellung eines Verfahrens 500 zum Überwachen eines Kommunikationsnetzwerkes mit einer Mehrzahl an Subnetzwerken gemäß einer beispielhaften Ausführungsform.

Das Verfahren 500 dient dem Überwachen eines Kommunikationsnetzwerks mit einer Mehrzahl von Subnetzwerken, beispielsweise dem oben zu Figur 3 beschriebenen Kommunikationsnetzwerk 300 oder dem oben zu Figur 4 beschriebenen Kommunikationsnetzwerk 400, mit einem ersten Subnetzwerk (Slice I) und einem zweiten Subnetzwerk (Slice II), wobei dem ersten Subnetzwerk eine erste Kommunikationsentität mit einer ersten Netzwerkfunktion zugeordnet ist, und wobei dem zweiten Subnetzwerk eine zweite Kommunikationsentität mit einer zweiten Netzwerkfunktion zugeordnet ist.

Das Verfahren weist einen ersten Schritt 501 auf: Überwachen eines Kommunikationsstatus der ersten Netzwerkfunktion der ersten Netzwerkentität des ersten Subnetzwerks durch einen ersten Monitor und Aussenden eines ersten Statussignals an einen Subnetzwerkmanager, wobei das erste Statussignal den Kommunikationsstatus der ersten Netzwerkfunktion anzeigt.

Das Verfahren weist einen zweiten Schritt 502 auf: Überwachen eines Kommunikationsstatus der zweiten Netzwerkfunktion der zweiten Netzwerkentität des zweiten Subnetzwerks durch einen zweiten Monitor und Aussenden eines zweiten Statussignals an den Subnetzwerkmanager, wobei das zweite Statussignal den Kommunikationsstatus der zweiten Netzwerkfunktion anzeigt.

Das Verfahren weist einen dritten Schritt 503 auf: Überwachen 503 von Kommunikationsressourcen des ersten Subnetzwerks und des zweiten Subnetzwerks durch den Subnetzwerkmanager auf der Basis des ersten Statussignals und des zweiten Statussignals.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 5 beschriebene Verfahren 500 oder die zu den Figuren 3 und 4 beschriebenen Vorgänge ausgeführt werden kann, wenn das Produkt auf einem Computer läuft. Das Computerprogrammprodukt kann auf einem computergeeigneten nicht-transitorischen Medium gespeichert sein und compuferlesbare Programmittel umfassen, die einen Computer veranlassen, das Verfahren 500 auszuführen oder die Netzkomponenten der in den Figuren 1 bis 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationsnetzwerk bzw. Kommunikationssystem
- 310:: erste Subnetzwerk bzw. Slice I
- 311:: erste Kommunikationsentität mit erster Netzwerkfunktion
- 312:: erster Monitor, dem ersten Subnetzwerk zugeordnet
- 313:: Kommunikationsstatus der ersten Netzwerkfunktion
- 316:: erstes Statussignal von erstem Monitor
- 320:: zweites Subnetzwerk bzw. Slice II
- 321:: zweite Kommunikationsentität mit zweiter Netzwerkfunktion
- 322:: zweiter Monitor, dem zweiten Subnetzwerk zugeordnet
- 323:: Kommunikationsstatus der zweiten Netzwerkfunktion
- 326:: zweites Statussignal von zweitem Monitor
- 330:: Subnetzwerkmanager

- 400:: Kommunikationsnetzwerk bzw. Kommunikationssystem
- 401:: Kommunikationsendgerät, z.B. UE
- 402:: Kommunikationszugang des UE zu erstem Subnetzwerk, z.B. über RAN
- 404:: Kommunikationszugang des UE zu zweitem Subnetzwerk, z.B. über RAN
- 311b:: dritte Kommunikationsentität mit dritter Netzwerkfunktion (in erstem Subnetzwerk)
- 311c:: vierte Kommunikationsentität mit vierter Netzwerkfunktion (in erstem Subnetzwerk)
- 321b:: fünfte Kommunikationsentität mit fünfter Netzwerkfunktion (in zweitem Subnetzwerk)
- 321c:: sechste Kommunikationsentität mit sechster Netzwerkfunktion (in zweitem Subnetzwerk)
- 313b:: Kommunikationsstatus der dritten Netzwerkfunktion (in erstem Subnetzwerk)
- 313c:: Kommunikationsstatus der vierten Netzwerkfunktion (in erstem Subnetzwerk)
- 323b:: Kommunikationsstatus der fünften Netzwerkfunktion (in zweitem Subnetzwerk)
- 323c:: Kommunikationsstatus der sechsten Netzwerkfunktion (in zweitem Subnetzwerk)
- 431:: Steuerungssignal der zweiten Netzwerkfunktion (in zweitem Subnetzwerk)
- 432:: Steuerungssignal der fünften Netzwerkfunktion (in zweitem Subnetzwerk)
- 433:: Steuerungssignal der sechsten Netzwerkfunktion (in zweitem Subnetzwerk)

- 500:: Verfahren zum Überwachen eines Kommunikationsnetzwerks mit mehreren Subnetzwerken
- 501:: erster Schritt: Überwachen des Kommunikationsstatus der 1. Netzwerkfunktion im 1. Subnetzwerk
- 502:: zweiter Schritt: Überwachen des Kommunikationsstatus der 2. Netzwerkfunktion im 2. Subnetzwerk
- 503:: dritter Schritt: Überwachen von Kommunikationsressourcen basierend auf 1. Statussignal und 2. Statussignal

## Patentansprüche

1. Kommunikationsnetzwerk (300, 400) mit einer Mehrzahl von Subnetzwerken (310, 320) mit einem ersten Subnetzwerk (Slice I, 310) und einem zweiten Subnetzwerk (Slice II, 320), wobei dem ersten Subnetzwerk (310) eine erste Kommunikationsentität mit einer ersten Netzwerkfunktion (311) zugeordnet ist, wobei dem zweiten Subnetzwerk (320) eine zweite Kommunikationsentität mit einer zweiten Netzwerkfunktion (321) zugeordnet ist, mit:
einem Subnetzwerkmanager (330) zur Überwachung von Kommunikationsressourcen des ersten Subnetzwerks (310) und des zweiten Subnetzwerks (320);
einem ersten Monitor (312), welcher ausgebildet ist, einen Kommunikationsstatus der ersten Netzwerkfunktion (311) der ersten Netzwerkentität des ersten Subnetzwerks (310) zu überwachen und ein erstes Statussignal (316) an den Subnetzwerkmanager (330) auszusenden, wobei das erste Statussignal (316) den Kommunikationsstatus der ersten Netzwerkfunktion (311) aufweist;
einem zweiten Monitor (322), welcher ausgebildet ist, einen Kommunikationsstatus der zweiten Netzwerkfunktion (321) der zweiten Netzwerkentität des zweiten Subnetzwerks (320) zu überwachen und ein zweites Statussignal (326) an den Subnetzwerkmanager (330) auszusenden, wobei das zweite Statussignal (326) den Kommunikationsstatus der zweiten Netzwerkfunktion (321) aufweist; wobei
der Subnetzwerkmanager (330) ausgebildet ist, die Kommunikationsressourcen des ersten Subnetzwerks (310) und des zweiten Subnetzwerks (320) auf der Basis des ersten Statussignals (316) und des zweiten Statussignals (326) zu überwachen.

2. Kommunikationsnetzwerk (300, 400) nach Anspruch 1,
wobei die erste Netzwerkfunktion (311) eine Zuordnung von Kommunikationsressourcen des ersten Subnetzwerks (310) zu der ersten Kommunikationsentität festlegt, und
wobei die zweite Netzwerkfunktion (321) eine Zuordnung von Kommunikationsressourcen des zweiten Subnetzwerks (320) zu der zweiten Kommunikationsentität festlegt.

3. Kommunikationsnetzwerk (300, 400) nach einem der vorstehenden Ansprüche,
wobei das erste Statussignal (316) eine Auslastung der Kommunikationsressourcen des ersten Subnetzwerks (310) anzeigt; und
wobei das zweite Statussignal (326) eine Auslastung der Kommunikationsressourcen des zweiten Subnetzwerks (320) anzeigt.

4. Kommunikationsnetzwerk (300, 400) nach einem der vorstehenden Ansprüche,
wobei das Kommunikationsnetzwerk (300) ein Kommunikationssystem einer fünften Generation (5G) oder einer weiteren Generation ist, und wobei die Subnetzwerke (310, 320) Slices des Kommunikationsnetzwerkes (300) sind.

5. Kommunikationsnetzwerk (300, 400) nach einem der vorstehenden Ansprüche,
wobei der Subnetzwerkmanager (330) ausgebildet ist, die Kommunikationsressourcen des ersten Subnetzwerks (310) und des zweiten Subnetzwerks (320) auf der Basis des ersten Statussignals (316) und des zweiten Statussignals (326) zu steuern.

6. Kommunikationsnetzwerk (300, 400) nach einem der vorstehenden Ansprüche,
wobei der Subnetzwerkmanager (330) ausgebildet ist, die erste Netzwerkfunktion (311) und/oder die zweite Netzwerkfunktion (321) auf der Basis einer Identifikation eines Kommunikationsendgeräts (401) zum Aufbau einer Kommunikationsverbindung zu dem Kommunikationsendgerät (401) festzulegen.

7. Kommunikationsnetzwerk (300, 400) nach Anspruch 6,
wobei der Subnetzwerkmanager (330) ausgebildet ist, die Kommunikationsverbindung zu dem Kommunikationsendgerät (401) entsprechend der ersten Netzwerkfunktion (311) und/oder der zweiten Netzwerkfunktion (321) aufzubauen.

8. Kommunikationsnetzwerk (300, 400) nach Anspruch 6 oder 7,
wobei der Subnetzwerkmanager (330) ausgebildet ist, Zugangseinrichtungen, Netzwerkeinrichtungen, Prozessoreinrichtungen und/oder Speichereinrichtungen des ersten Subnetzwerks (310) entsprechend der ersten Netzwerkfunktion (311) zum Aufbau der Kommunikationsverbindung zu dem Kommunikationsendgerät (401) zusammenzustellen und zu konfigurieren.

9. Kommunikationsnetzwerk (300, 400) nach einem der Ansprüche 6 bis 8,
wobei der Subnetzwerkmanager (330) ausgebildet ist, Bandbreiten, Datenraten, Diensttypen und/oder Dienstqualität von Kommunikationsressourcen des ersten Subnetzwerks (310) entsprechend der ersten Netzwerkfunktion (311) zum Aufbau der Kommunikationsverbindung zu dem Kommunikationsendgerät (401) zu konfigurieren.

10. Kommunikationsnetzwerk (300, 400) nach einem der Ansprüche 6 bis 9,
wobei der Subnetzwerkmanager (330) ausgebildet ist, basierend auf dem ersten Statussignal (316) einen Fehler in den Kommunikationsressourcen des ersten Subnetzwerks (310) zu erkennen.

11. Kommunikationsnetzwerk (300, 400) nach Anspruch 10,
wobei der Subnetzwerkmanager (330) ausgebildet ist, bei Erkennung eines Fehlers in den Kommunikationsressourcen des ersten Subnetzwerks (310) die erste Netzwerkfunktion (311) so abzuändern, dass sie eine Zuordnung von fehlerfreien Kommunikationsressourcen des ersten Subnetzwerks (310) zu der ersten Kommunikationsentität festlegt.

12. Kommunikationsnetzwerk (300, 400) nach Anspruch 11,
wobei der Subnetzwerkmanager (330) ausgebildet ist, bei Erkennung eines Fehlers in den Kommunikationsressourcen des ersten Subnetzwerks (310) die Kommunikationsverbindung zu dem Kommunikationsendgerät (401) entsprechend der abgeänderten ersten Netzwerkfunktion (311) und/oder der zweiten Netzwerkfunktion (321) umzukonfigurieren.

13. Kommunikationsnetzwerk (300, 400) nach einem der Ansprüche 6 bis 12,
wobei dem ersten Subnetzwerk (310) eine dritte Kommunikationsentität mit einer dritten Netzwerkfunktion (311b) zugeordnet ist; und
wobei der Subnetzwerkmanager (330) ausgebildet ist, die Kommunikationsverbindung zu dem Kommunikationsendgerät (401) unter Verwendung der ersten Kommunikationsentität gemäß der ersten Netzwerkfunktion (311) und der dritten Kommunikationsentität gemäß der dritten Netzwerkfunktion (311 b) aufzubauen.

14. Kommunikationsnetzwerk (300, 400) nach einem der vorstehenden Ansprüche,
wobei das zweite Subnetzwerk (320) ein von dem ersten Subnetzwerk (310) isoliertes Test-Subnetzwerk ist; und
wobei der zweite Monitor (322) ausgebildet ist, den Kommunikationsstatus der zweiten Netzwerkfunktion (321) der zweiten Netzwerkentität in Abhängigkeit verschiedener Testversionen der zweiten Netzwerkfunktion (321) zu überwachen.

15. Verfahren (500) zum Überwachen eines Kommunikationsnetzwerks mit einer Mehrzahl von Subnetzwerken mit einem ersten Subnetzwerk (Slice I) und einem zweiten Subnetzwerk (Slice II), wobei dem ersten Subnetzwerk eine erste Kommunikationsentität mit einer ersten Netzwerkfunktion zugeordnet ist, und wobei dem zweiten Subnetzwerk eine zweite Kommunikationsentität mit einer zweiten Netzwerkfunktion zugeordnet ist, wobei das Verfahren die folgenden Schritte aufweist:
Überwachen (501) eines Kommunikationsstatus der ersten Netzwerkfunktion der ersten Netzwerkentität des ersten Subnetzwerks durch einen ersten Monitor und Aussenden eines ersten Statussignals an einen Subnetzwerkmanager, wobei das erste Statussignal den Kommunikationsstatus der ersten Netzwerkfunktion anzeigt;
Überwachen (502) eines Kommunikationsstatus der zweiten Netzwerkfunktion der zweiten Netzwerkentität des zweiten Subnetzwerks durch einen zweiten Monitor und Aussenden eines zweiten Statussignals an den Subnetzwerkmanager, wobei das zweite Statussignal den Kommunikationsstatus der zweiten Netzwerkfunktion anzeigt; und
Überwachen (503) von Kommunikationsressourcen des ersten Subnetzwerks und des zweiten Subnetzwerks durch den Subnetzwerkmanager auf der Basis des ersten Statussignals und des zweiten Statussignals.
